Europäisches Patentamt

European Patent Office

Office européen des brevets

(11) Publication number: **0 235 924 B1**

# EUROPEAN PATENT SPECIFICATION

(45) Date of publication of patent specification: **25.03.92**  (51) Int. Cl.⁵: **B60R 16/02**

(21) Application number: **87300704.1**

(22) Date of filing: **28.01.87**

(54) **Molded wire harness.**

(30) Priority: **07.02.86 JP 15839/86**

(43) Date of publication of application:
**09.09.87 Bulletin 87/37**

(45) Publication of the grant of the patent:
**25.03.92 Bulletin 92/13**

(84) Designated Contracting States:
**DE FR GB**

(56) References cited:
**EP-A- 0 069 709**
**DE-A- 3 337 596**
**DE-A- 3 403 611**
**US-A- 3 896 259**

(73) Proprietor: **YAZAKI CORPORATION**
**4-28, Mita 1-chome**
**Minato-ku Tokyo 108(JP)**

(72) Inventor: **Watanabe, Mitsugu**
**1424, Washizu**
**Kosai-shi Shizuoka 431-04(JP)**
Inventor: **Kaneko, Kazuhiko**
**1424, Washizu**
**Kosai-shi Shizuoka 431-04(JP)**
Inventor: **Matsumoto, Etsuji**
**1424, Washizu**
**Kosai-shi Shizuoka 431-04(JP)**

(74) Representative: **Prutton, Roger et al**
**MARKS & CLERK Alpha Tower Suffolk Street**
**Oueensway**
**Birmingham B1 1TT(GB)**

## Description

### BACKGROUND OF THE INVENTION

The present invention relates to a wire harness for use in the electric circuit of an automobile and, more specifically, to a molded wire harness formed so as to be arranged on the body of an automobile.

Generally, a wire harness for use in the electric circuit of an automobile comprises a trunk portion formed by binding a plurality of wires with tapes, and branch portions of different lengths extending from the trunk portion. The trunk portion is arranged along a car body and is secured thereto with clips, while connectors connected to the respective free ends of the branch portions are connected to the electric equipment.

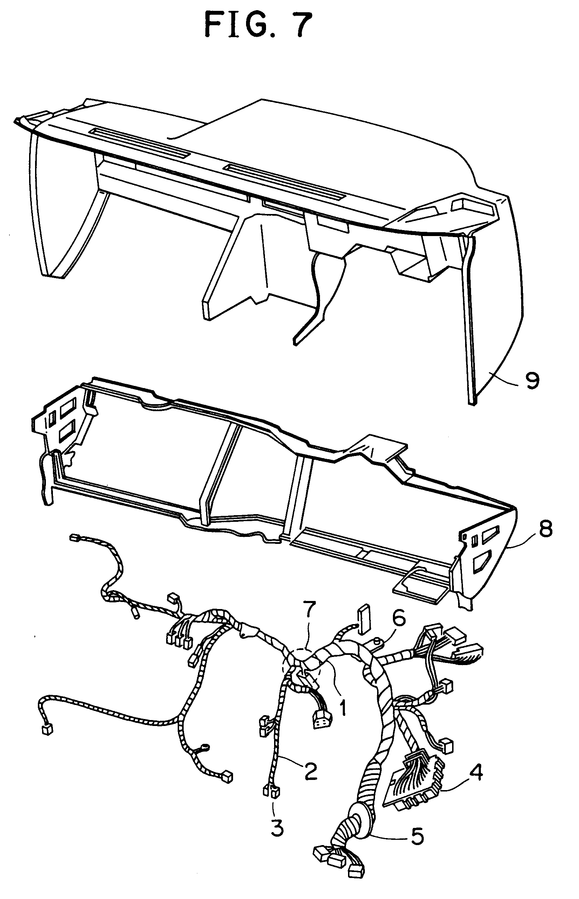

Such a wire harness will be described more concretely with reference to Figure 7. A trunk portion 1 is formed by binding a plurality of wires with tapes. A plurality of branch portions 2 of different lengths are branched from the trunk portions 1. Connectors 3 connected to the respective free ends of the branch portions 2 are connected to electric equipment including motors and switches. An electric junction box 4 serving as a junction box and a fuse box is provided to protect the wire harness (preventing a fire attributable to a short-circuit) and to concentrate the electronic units. A grommet 5 is provided in a hole formed in the car body to protect the wire harness extending through the hole. Clips 6 for fixing the wire harness to the body are fixed to the wire harness with tapes. The trunk portion 1 has a slack portion 7 therein to facilitate the positional adjustment of the wire harness in arranging the same on the body. In Figure 7, indicated at 8 is the lean horse of an instrument panel 9 on which the wire harness is arranged.

In fixing the wire harness W to the lean horse 8 and the panel 9, the wire harness W is passed through hole formed in the body, not shown, and the grommet 5 is fitted in the through hole, then the clips 6 are fixed sequentially to the body to fasten the wire harness W to the body, and then the connectors 3 are connected to the corresponding electric equipment, respectively. In arranging the wire harness W on the body in such a manner, the slack portion 7 of the wire harness W is necessary for the positional adjustment of the wire harness W on the lean horse 8 and the panel 9.

As apparent from the foregoing description, the conventional wire harness has a plurality of branch portions extending in indefinite directions from the trunk portion and has an excessively high degree of freedom, and hence it is very difficult to automate the wire harness arranging process. On the other hand, the entanglement of the branch portions with each other in storing or transporting the wire harness makes the automation of the wire harness arranging process further difficult. Furthermore, the slack portion of the trunk portion for the positional adjustment of the wire harness in arranging the same on the body generates noises while the automobile is running.

It is known from DE-A-3337596 to enclose the wires of a short trunk portion of a wiring harness in synthetic resin material, but no provision is disclosed for adjustment of the trunk portion to enable it to fit properly in the car body.

Accordingly, it is an object of the present invention to provide a molded wire harness in which the foregoing drawbacks of the conventional wire harness are eliminated, which is capable of being arranged on the body of an automobile through an automated process, and having no slack portion of the trunk line which is liable to cause noises.

According to the invention there is provided a molded wire harness comprising: a trunk portion comprising a plurality of wires, entirely or partly impregnated with a synthetic resin or the like through molding so as to maintain a predetermined shape conforming to the wiring path thereof on the body of an automobile; a plurality of branch portions extending from the trunk portion, and entirely or partly impregnated with a synthetic resin or the like through molding so as to maintain predetermined shapes conforming to the wiring paths thereof on the body, respectively; and connectors connected to the free ends of the trunk portion and the branch portions for connecting the trunk portion and the branch portions to electric equipments, respectively, characterised by at least one size adjusting portion in the trunk portion and/or the branch portions said size adjusting portion being flexible or stretchable.

Since the wire harness according to the present invention has a trunk portion and branch portions which are formed by sheathing wires in a synthetic resin by molding in predetermined shapes, respectively, the wire harness is capable of maintaining the predetermined shape. Accordingly, it is possible to automate most part of the manual assembling work for mounting the wire harness on the body of an automobile. Furthermore, since the molded wire harness according to the present invention has at least one flexible or stretchable size adjusting portion, which may employ a corrugated tube or tubes instead of a slack part or parts provided in the conventional wire harness, the molded wire harness can be arranged on the body of an automobile substantially without any slack by properly bending, stretching or contracting the size adjusting part when necessary, so that the molded wire harness does not generate any noise.

The above and other objects, features and advantages of the present invention will become more apparent from the following description taken in conjunction with the accompanying drawings.

## BRIEF DESCRIPTION OF THE DRAWINGS

Figure 1 is a perspective view of assistance in explaining a process for forming a molded wire harness according to the present invention;

Figure 2 is a perspective view of molded wire harnesses according to the present invention as arranged on the body of an automobile;

Figure 3 is a partly cutaway fragmentary perspective view of a molded wire harness according to the present invention;

Figures 4a, 4b and 4c are sectional views of assistance in explaining the function of a corrugated tube provided in a molded wire harness according to the present invention;

Figures 5a and 5b are a longitudinal sectional view and a cross-sectional view, respectively, of a part indicated at A of the molded wire harness shown in Figure 3;

Figure 6 is a perspective view of assistance in explaining another process for forming a molded wire harness according to the present invention; and

Figure 7 is perspective view of assistance in explaining the constitution of a conventional wire harness shown in combination with the lean horse and instrument panel of an automobile.

## BRIEF DESCRIPTION OF THE DRAWINGS

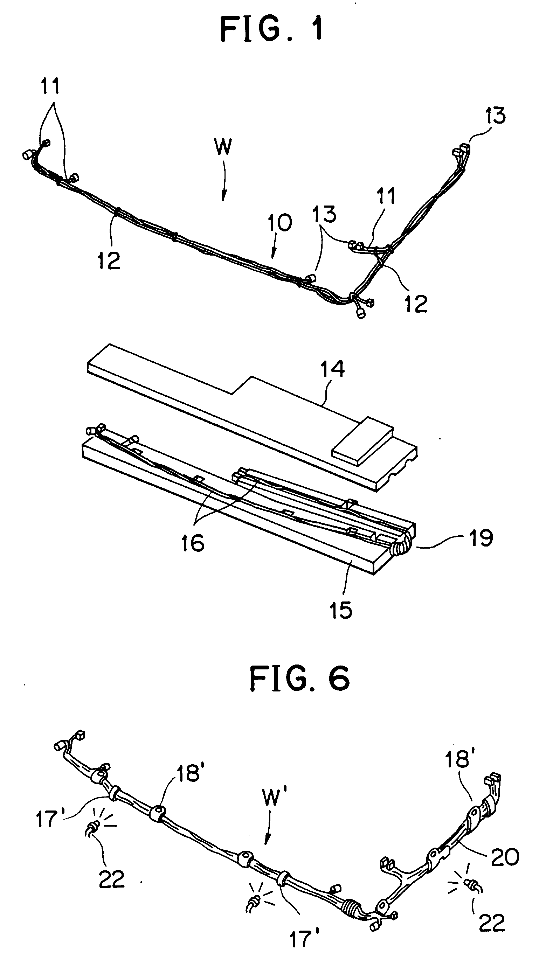

Referring to Figure 1, a wire harness W has a substantially L-shaped trunk line 10 and branch lines 11. The wire harness W is the same as the conventional wire harness in construction except that a plurality of the component wires thereof are bound loosely at several parts with band clips or tapes 12. Connectors 13 are connected to the respective free ends of the branch lines 11, respectively.

A mold consists of a top half mold 14 and a bottom half mold 15 each having two molding grooves 16. Recesses, not shown, for molding positioning projections 17 and clamps 18, which will be described afterward, are formed in the molding grooves 16. A corrugated tube 19 is fitted on the corner of the wire harness W before placing the wire harness W in the mold for molding.

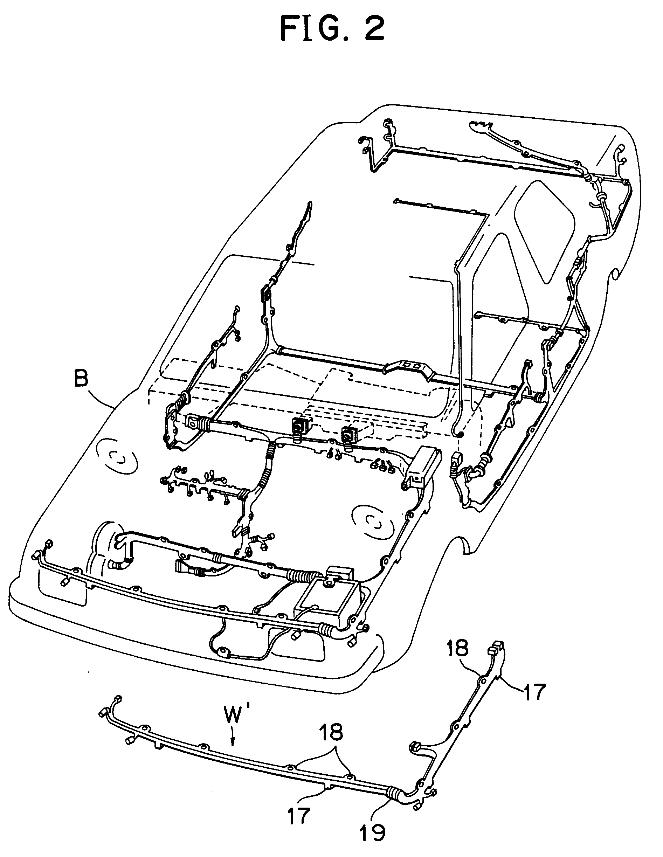

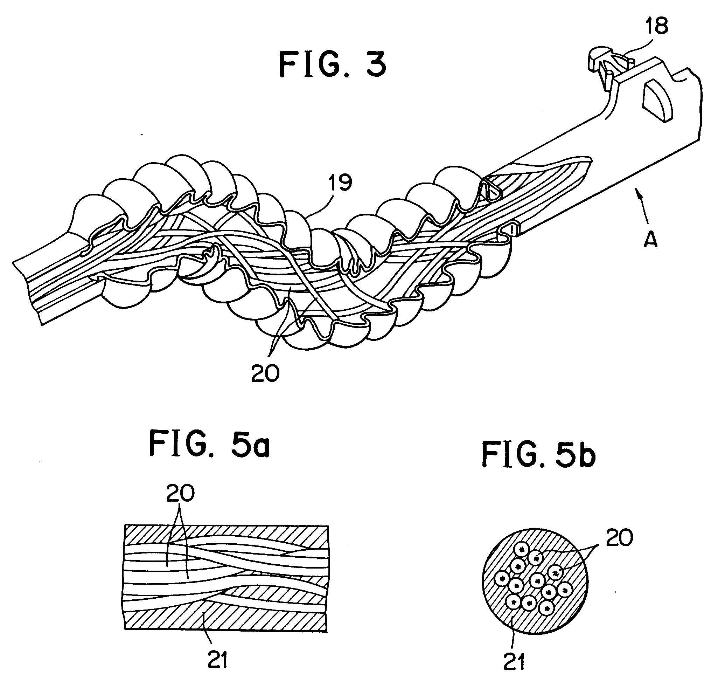

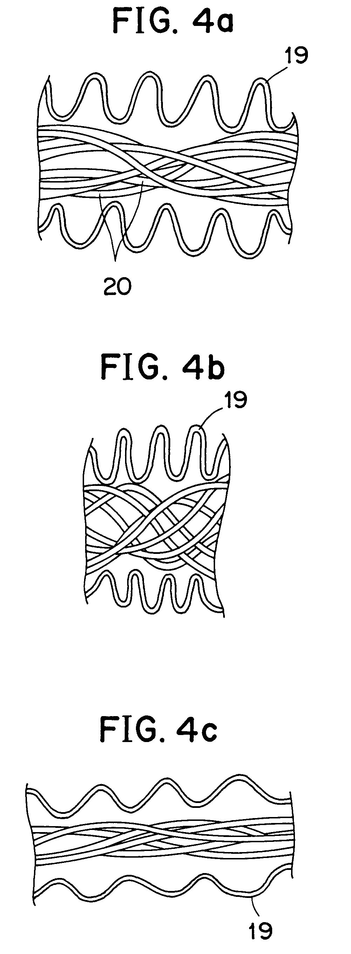

Figure 2 illustrates a molded wire harness W' formed by placing the wire harness W in the mold and injecting a synthetic resin into the mold. The corrugated tube 19 is a flexible or stretchable tube made of elastic rubber, a synthetic rubber or a synthetic resin, such as soft vinyl chloride or polyethylene. The most portion of the trunk line 10 and a portion of each branch line 11 of the molded wire harness W' are sheathed in the synthetic resin so that the molded wire harness W' maintains a fixed shape and each branch line 11 is directed in a predetermined direction as illustrated in Figure 2. The positioning projections 17 for positioning the molded wire harness W' on the body of an automobile and the clamps 18 for fastening the molded wire harness W' to the body are formed integrally with the trunk line 10. As illustrated in Figure 3, a plurality of wires 20 are extended loosely in the corrugated tube 19 so that the corrugated tube 19 in a state as shown in Figure 4a can be contracted in a state as shown in Figure 4b or stretched in a state as shown in Figure 4c. Naturally, the corrugated tube 19 is bendable. As illustrated in Figures 5a and 5b, the trunk line 10 is fully impregnated with a synthetic resin 21 in a solid state, and hence gaps between the wires 20 are filled with the synthetic resin 21. When necessary, the connectors 13 can be waterproofed by injecting the synthetic resin 21 into the connectors 13.

As mentioned above, since the molded wire harness W' maintains a fixed shape, the molded wire harness W' can be transported and attached to the body B as illustrated in Figure 2 by a conveying apparatus and an assembling robot, not shown, by automatically putting the positioning projections into corresponding positioning recesses and automatically fastening the clamps 18 to the body B. After the molded wire harness W' has thus been attached to the body B, the connectors 13 are connected manually to the electric equipments, respectively. Since the molded wire harness W' has a size adjusting part provided with the corrugated tube 19 and is flexible and stretchable, the automatic assembling of the molded wire harness W' and the body B is carried out comparatively easily. Furthermore, substantially, the molded wire harness does not have any slack therein, and hence the molded wire harness W' mounted on the body B does not generate any noise while the automobile is running.

Figure 6 illustrates a molded wire harness W' formed by another process. Positioning projections 17' and clamps 18', which are formed through separate processes, are attached with wires or suitable means to a bundle of wires 20, and then an organic solvent is sprayed on the wires 20, the positioning projections 17' and the clamps 18' with a spray gun 22 to dissolve the surfaces of the same so that the wires 20, the positioning projections 17' and the clamps 18' are joined together adhesively. The organic solvent is tetrahydrofuran, methanol, ethanol, benzene or trichloroethylene.

As apparent from what has been described hereinbefore, since the molded wire harness according to the present invention maintains a predetermined shape and has a flexible or stretchable size adjusting part or parts, part of the work for attaching the molded wire harness to the body of an automobile can be automated, and there is no possibility that the molded wire harness generates noises while the automobile is running. Furthermore, since the molded wire harness maintains the predetermined shape, the branch lines will not entangle with each other in storing or transporting the molded wire harness, which facilitates handling the molded wire harness.

Still further, the molded wire harness including the connectors incorporated thereto can be waterproofed by perfectly impregnating the bundle of the component wires and the connectors in the molding process.

Although the invention has been described in its preferred form with a certain degree of particularity, it is to be understood that many variations and changes are possible in the invention without departing from the scope as defined in the claims.

## Claims

1.  A molded wire harness comprising: a trunk portion (10) comprising a plurality of wires (20), entirely or partly impregnated with a synthetic resin or the like (21) through molding so as to maintain a predetermined shape conforming to the wiring path thereof on the body of an automobile; a plurality of branch portions (11) extending from the trunk portion, and entirely or partly impregnated with a synthetic resin or the like through molding so as to maintain predetermined shapes conforming to the wiring paths thereof on the body, respectively; and connectors (13) connected to the free ends of the trunk portion (10) and the branch portions (11) for connecting the trunk portion and the branch portions to electric equipments, respectively, characterised by at least one size adjusting portion (19) in the trunk portion and/or the branch portions said size adjusting portion being flexible or stretchable.

2.  A molded wire harness as claimed in Claim 1, wherein positioning projections for positioning the molded wire harness on the body, and clamps for fastening the molded wire harness to the body are formed integrally with the trunk line.

3.  A molded wire harness as recited in Claim 1, wherein said at least one size adjusting part is formed of loosely extended wires enclosed in a corrugated tube.

4.  A molded wire harness as recited in Claim 1, wherein said connectors are waterproofed by being impregnated with a synthetic resin or the like.

## Revendications

1.  Harnais de câbles moulé comprenant : une portion de tronc (10), qui comprend plusieurs câbles (20), entièrement ou partiellement imprégnés à l'aide d'une résine synthétique ou analogues (21), par moulage, de façon à maintenir une forme prédéterminée qui épouse les voies de câblage qui leur sont destinées, sur la carrosserie d'un véhicule automobile; plusieurs portions de branches (11) s'étendant à partir de la portion de tronc et étant entièrement ou partiellement imprégnées à l'aide d'une résine synthétique ou analogues, par moulage, de façon à maintenir des formes prédéterminées qui épousent les voies de câblage qui leur sont destinées, sur la carrosserie, respectivement; ainsi que des raccords (13) reliés aux extrémités libres de la portion de tronc (10) et des portions de branches (11) afin de raccorder la portion de tronc et les portions de branches à des équipements électriques, respectivement, caractérisé par au moins une portion (19) permettant de régler la dimension et faisant partie de la portion de tronc et/ou des portions de branches, ladite portion permettant de régler la dimension étant flexible ou extensible.

2.  Harnais de câbles moulé selon la revendication 1, dans lequel on façonne solidairement avec la ligne de tronc, des projections de positionnement destinées à positionner le harnais de câbles moulé sur la carrosserie, ainsi que des pinces destinées à fixer le harnais de câbles moulé à la carrosserie.

3.  Harnais de câbles moulé selon la revendication 1, dans lequel au moins ladite partie permettant de régler la dimension est façonnée à partir de câbles étirés de manière lâche et renfermés dans un tube annelé.

4.  Harnais de câbles moulé selon la revendication 1, dans lequel on imperméabilise lesdits raccords en les imprégnant à l'aide d'une résine synthétique ou analogues.

## Patentansprüche

1.  Geformter Kabelbaum mit einem Schaftabschnitt (10), der eine Vielzahl von Kabeln (20) umfaßt, die vollständig oder teilweise mit einem Kunstharz (21) o.ä. durch Formen imprägniert sind, so daß sie eine vorgegebene Form aufrechterhalten, die an ihren Verdrahtungsweg an der Karosserie eines Kraftfahrzeuges angepaßt ist, einer Vielzahl von Verzweigungsabschnitten (11), die sich vom Schaftabschnitt aus erstrecken und vollständig oder teilweise mit einem Kunstharz o.ä. durch Formen imprägniert sind, um vorgegebene Formen aufrechtzuerhalten, die an die Verdrahtungswege an der Karosserie angepaßt sind, und Verbindern (13), die an die freien Enden des Schaftabschnittes (10) und der Verzweigungsabschnitte (11) angeschlossen sind, um den Schaftabschnitt und die Verzweigungsabschnitte mit elektrischen Einrichtungen zu verbinden, **gekennzeichnet durch** mindestens einen Größeneinstellabschnitt (19) im Schaftabschnitt und/oder den Verzweigungsabschnitten, der flexibel oder dehnbar ist.

2. Geformter Kabelbaum nach Anspruch 1, bei dem Positionierungsvorsprünge zum Positionieren des geformten Kabelbaumes an der Karosserie und Klemmen zum Befestigen des geformten Kabelbaumes an der Karosserie einstückig mit der Schaftleitung ausgebildet sind.

3. Geformter Kabelbaum nach Anspruch 1, bei dem der mindestens eine Größeneinstellteil aus lose verlaufenden Kabeln geformt ist, die von einem Wellrohr umschlossen sind.

4. Geformter Kabelbaum nach Anspruch 1, bei dem die Verbinder wasserundurchlässig sind, indem sie mit einem Kunstharz imprägniert sind.

# FIG. 1

# FIG. 6

# FIG. 2

# FIG. 3

18

19

20

A

# FIG. 5a

20

21

# FIG. 5b

20

21

# FIG. 4a

# FIG. 4b

# FIG. 4c

# FIG. 7